# FASCICULE DE BREVET EUROPEEN

(11) **EP 1 063 077 B1**
(45) Date de publication et mention de la délivrance du brevet: **27.08.2003**
(21) Numéro de dépôt: 00401745.5
(22) Date de dépôt: 19.06.2000
(51) Int. Cl.: B29C 51/04, B29C 51/34

(54) **Procédé de fabrication d'articles de conditionnement et machine de fabrication correspondante**
Verfahren zum Herstellen von Verpackungen und dazugehörende Vorrichtung
Process for producing packages and apparatus for producing the same

(30) Priorité: 24.06.1999 FR 9908098
(43) Date de publication de la demande: 27.12.2000
(73) Titulaire: Société technologique de Précision mécanique, 93160 Noisy-le-Grand (FR)
(72) Inventeur: Marcel, Michel, 77410 Villevaude (FR); Marcel, Christophe, 77410 Villevaude (FR)
(74) Mandataire: Jacobson, Claude

(56) Documents cités:
- EP-A- 0 842 753
- DE-A- 19 738 954
- FR-A- 1 427 784
- FR-A- 2 501 567

## Description

La présente invention est relative à un procédé de fabrication d'articles de conditionnement et à une machine de fabrication correspondante.

Elle est destinée à la fabrication d'articles de stockage de produits, notamment alimentaires ou cosmétiques, du type pots ou flacons, ayant un corps creux muni d'une extrémité ouverte formant col, c'est à dire d'articles ayant un corps dont au moins certaines sections sont plus grandes que celles de l'ouverture.

L'une des techniques les mieux adaptées pour la réalisation à faible coût de tels articles consiste dans le procédé conforme au préambule de la revendication 1. Un tel procédé est connu du document FR-1 427 784.

Le but de l'invention est de fournir un procédé et un dispositif permettant la fabrication d'articles de ce type à coût réduit et qui puisse être intégré à une chaîne de fabrication et de conditionnement.

Elle a donc pour objet un procédé de fabrication d'articles du type conforme à la revendication 1.

Ainsi, on conserve la maîtrise de l'article après ouverture du moule ce qui rend possible son transfert vers un poste de conditionnement et on limite la quantité de matière première utilisée.

Le procédé de fabrication selon l'invention peut en outre comporter une ou plusieurs des caractéristiques des revendications secondaires 2 à 4.

L'invention a également pour objet une machine de fabrication d'articles de conditionnement conforme à la revendication 5.

Cette machine peut également comporter une ou plusieurs des caractéristiques des revendications secondaires 6 à 9.

D'autres caractéristiques et avantages ressortiront de la description suivante, donnée uniquement à titre d'exemple, et faite en référence aux dessins annexés sur lesquels :
- la figure 1 est une vue schématique en coupe d'une machine de fabrication d'articles de conditionnement conforme à l'invention, après l'étape d'application d'une feuille ou bande de matière thermoplastique sur l'ouverture du moule ;
- la figure 2 montre la machine de la figure 1 après soufflage de l'ébauche ; et
- la figure 3 montre la machine de la figure 1 après ouverture du moule.

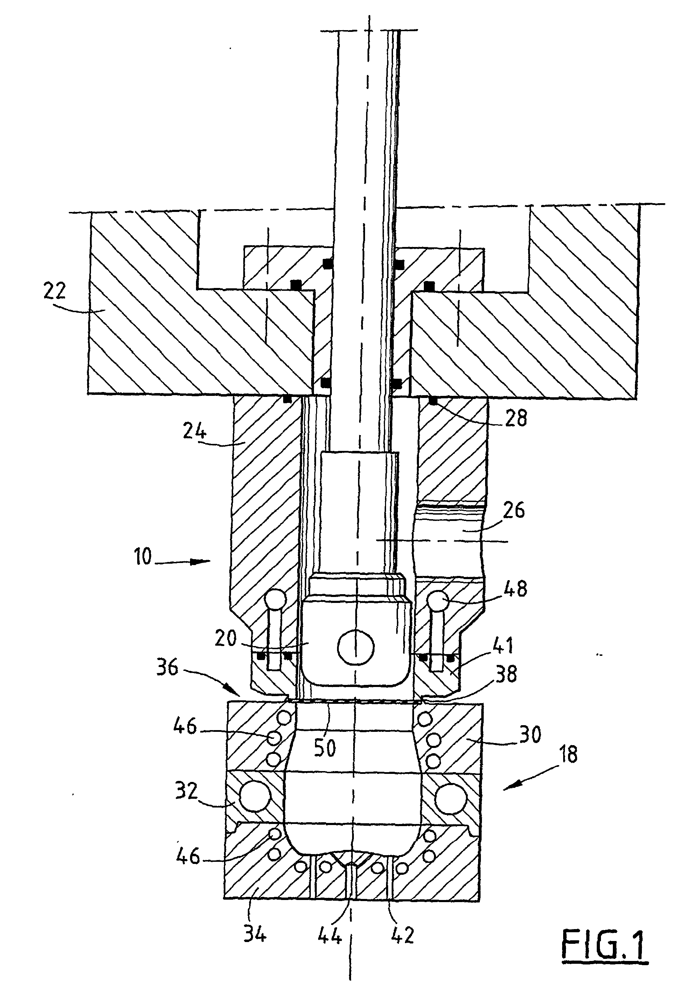

Sur les figures 1 à 3, on a représenté une machine de fabrication d'articles de conditionnement de produit, désignée par la référence numérique générale 10.

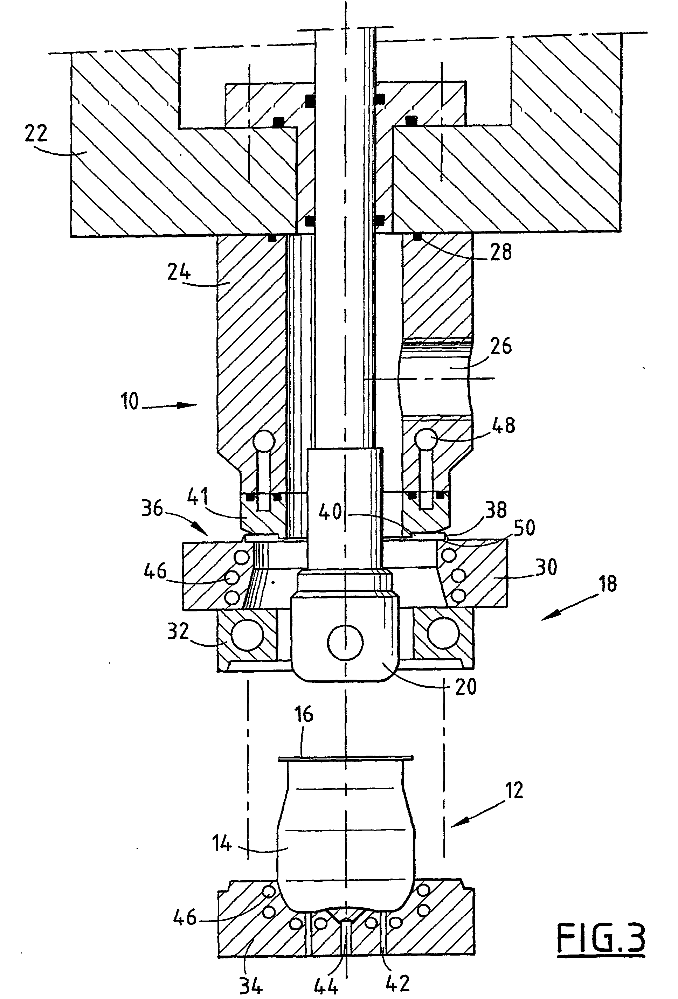

Elle est destinée à la fabrication d'articles creux 12 (figure 3) du type comprenant un corps creux 14 muni d'une extrémité ouverte 16 formant col, par emboutissage-formage d'une feuille ou bande thermoplastique.

C'est à dire, elle est destinée à réaliser des articles dont au moins certaines sections sont plus grandes que celles de l'extrémité ouverte 16.

La machine 10 comporte principalement un moule 18 dont l'empreinte intérieure correspond à la forme de l'article fini 12 et un emboutisseur comportant un piston 20 associé à des moyens moteurs (non représentés) disposés dans un carter 22.

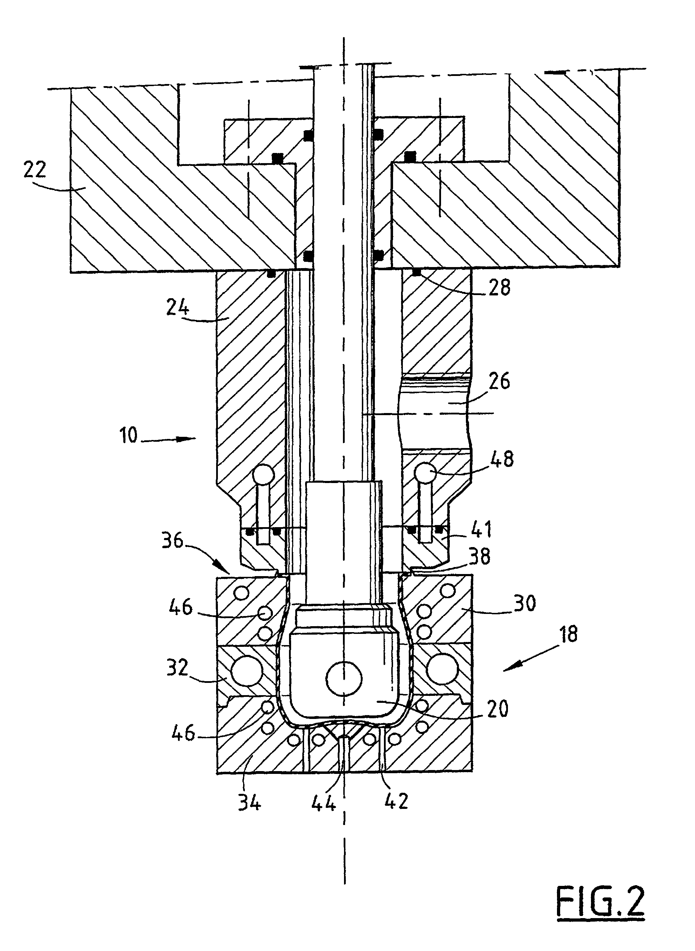

Le piston 20 est déplaçable axialement dans un cylindre de guidage 24 du carter 22 entre une position rétractée de repos, visible sur la figure 1, dans laquelle il se situe en dehors du moule 18, et une position active d'emboutissage, visible sur la figure 2, dans laquelle le piston pénètre dans le moule pour former une ébauche.

Comme on le voit en particulier sur la figure 1, le cylindre de guidage 24 débouche dans l'empreinte du moule et est équipé d'un conduit 26 d'alimentation en air sous pression destiné à être raccordé à une source d'alimentation correspondante ( non représentée).

Un ensemble de joints, tels que 28, sont disposés entre le cylindre 24 et le reste du carter 22 et entre le piston 20 et le carter 22 de manière à assurer une étanchéité à l'air de l'assemblage.

Comme on le voit sur les figures 1 et 2, le moule 18 est constitué par l'association de trois étages d'éléments de moule 30, 32 et 34 constituant chacun une matrice pour le moulage d'un tronçon d'article et associé chacun à des moyens moteurs de commande de l'ouverture et de la fermeture du moule (non représentés).

Ces étages 30, 32 et 34 s'étendent respectivement du haut vers le bas de la machine.

L'étage supérieur 30 est constitué par l'association d'une paire d'éléments de moules dissociables. Il est destiné au moulage de la partie supérieure des articles 12 et est doté, au niveau de sa tranche d'extrémité supérieure 36 d'un poinçon 38 annulaire destiné à coopérer avec un siège 40 de forme complémentaire porté par un contre-moule 41 solidaire du cylindre de guidage 24 pour procéder au détourage d'une feuille ou bande de matière thermoplastique utilisée pour la fabrication des articles 12, ou le détourage de ces articles, comme cela sera décrit par la suite.

L'étage intermédiaire 32 a une forme annulaire et est destiné au moulage de la portion intermédiaire des articles 12, c'est à dire la portion ayant les sections en coupe transversale les plus grandes.

Il est également utilisé pour la décoration des articles et reçoit à cet effet, par exemple, avant fermeture du moule, une étiquette décorative autocollante.

Enfin, l'étage inférieur 34 est destiné au moulage du fond des articles 12. Il est doté, d'une part, de canaux, tels que 42 permettant l'expulsion de l'air emplissant le moule en début de fabrication des articles et d'au moins une tubulure 44 d'aspiration destinée à être connectée à un appareil d'aspiration pour le maintien de l'article 12 contre ce fond 34 après ouverture du moule.

On voit enfin sur ces figures que le moule 18 est doté d'un réseau de canaux, 46 intégrés à la paroi du moule, ces canaux étant destinés à être raccordés à une source d'alimentation en fluide de refroidissement.

Un tel canal, 48, est également prévu dans la paroi constitutive du cylindre 24 de guidage du piston 20.

Le poinçon annulaire 38 porté par l'étage supérieur 30 du moule 18 présente un diamètre supérieur à celui de l'ouverture de l'empreinte du moule de manière à délimiter un épaulement 50 destiné à la formation du bord périphérique supérieur du col 16.

Toutefois, le diamètre interne du poinçon 38 est inférieur au diamètre intérieur maximum de l'empreinte du moule définie par l'étage intermédiaire 32 de manière à permettre un démoulage de l'article 12 selon une direction verticale.

Les principales phases du procédé de fabrication mises en oeuvre au moyen de la machine 10 qui vient d'être décrite vont maintenant être exposées en référence aux figures 1 à 3.

Lors d'une première phase, on procède à l'assemblage du moule, en associant des éléments constitutifs de l'étage supérieur 30, et en regroupant les trois étages 30, 32 et 34.

Dans cette position, la tranche d'extrémité supérieure 36 du moule 18 est espacée de l'extrémité inférieure du cylindre de guide 34 et, en particulier du contre moule 41.

Une feuille ou bande 50 de matériau thermoplastique, constituée par exemple de polyéthylène, de PVC, de polyéthylène téréphtalate, est amenée par des moyens moteurs appropriés, de type classique, sur l'extrémité ouverte de l'empreinte du moule 18 de manière à venir recouvrir l'étage supérieur 30 et à être positionnée sur le poinçon 38.

Des moyens de chauffage approprié intégrés à la machine 10 provoquent un chauffage de la bande ou feuille 50 jusqu'à une température égale ou supérieure à la limite d'élasticité du matériau.

Lors de la phase suivante, le moule assemblé 18 est déplacé en direction du cylindre de guidage 24 de manière à appliquer le poinçon 38 contre le siège 40 et provoquer ainsi un détourage de la bande ou feuille 50.

Après cette étape, la machine se situe dans la position représentée sur la figure 1, dans laquelle le piston 20 se situe en position de repos et la feuille ou bande 50 est maintenue par le poinçon 38 en appui contre le siège 40.

Lors de la phase suivante, les moyens moteurs de commande du déplacement du piston 20 sont actionnés de manière à provoquer un emboutissage de la feuille ou bande 50 par introduction du piston dans l'enceinte du moule à travers l'ouverture de cette dernière de manière à former une ébauche.

On injecte ensuite de l'air sous pression dans l'empreinte du moule par le conduit 26 de manière à souffler l'ébauche formée contre la paroi du moule. La machine se situe alors dans la position illustrée sur la figure 2.

Au cours de cette phase, l'air remplissant le moule est expulsé par les canaux 42.

Après soufflage de l'ébauche, cette dernière est refroidie au moyen du fluide de refroidissement circulant dans les canaux de refroidissement 46, de manière à faire baisser la température de l'ébauche soufflée jusqu'à une température inférieure à la limite d'élasticité, puis le moule est ouvert pour démouler l'article 12, par dissociation des étages 30, 32 et 34.

Pour ce faire, les éléments constitutifs de l'étage supérieur 30 sont dissociés et les moyens moteurs de commande du déplacement du fond 34 sont actionnés de manière à le déplacer vers le bas.

La machine se situe dès lors dans la position représentée sur la figure 3.

On notera qu'au cours de l'ouverture du moule, l'appareil d'aspiration connecté aux tubulures 44 d'aspiration est actionné de manière à maintenir l'article 12 contre le fond 34 et son transfert vers un poste de conditionnement.

Ainsi, en raison du dimensionnement particulier de la section interne de l'étage intermédiaire qui autorise le passage du col de l'article 12, le déplacement du fond 34 du moule provoque la libération de l'article 12 des étages supérieurs 30 et 32.

Le transfert de l'article s'effectue, lors d'une première étape, au moyen du déplacement du fond 34 de manière à dégager l'article 12 puis, lors d'une deuxième étape, en utilisant un moyen de préhension (non représenté) équipant la machine 10, constitué par exemple par une fourche venant saisir le col 16 de l'article 12, pour transférer cet article vers le poste de conditionnement au niveau duquel l'article est emplit puis obturé.

Par exemple, cette obturation s'effectue en coiffant le col 16 d'un opercule pelable ou en venant visser un bouchon.

Bien entendu, dans ce dernier cas, l'empreinte de l'étage supérieur 30 du moule 18 est conformée de manière à réaliser un filetage sur la surface externe du col 16.

De préférence, après déplacement du fond 34 portant l'article 12, l'étage intermédiaire 32 est transféré au niveau d'un poste au niveau duquel une étiquette décorative autocollante est disposée sur l'empreinte de cet étage intermédiaire 32 de manière à permettre la décoration de l'article 12 au cours du soufflage de l'ébauche.

Dans l'exemple de réalisation qui vient d'être décrit, le détourage de la feuille ou bande plastique 50 s'effectue préalablement à la phase d'emboutissage. Bien que cette chronologie permette d'éviter tout phénomène de retrait susceptible d'engendrer des vagues dans la paroi constitutive des articles 12, il est également possible, en variante, d'effectuer cette opération de détourage après le soufflage de l'ébauche et avant ouverture du moule.

On conçoit que l'invention qui vient d'être décrite permet la réalisation d'articles par emboutissage-formage d'une bande ou feuille de matière thermoplastique à partir de laquelle seule la quantité nécessaire à la réalisation des articles est prélevée. On réduit ainsi grandement les coûts de fabrication de tels articles en limitant la quantité de matière thermoplastique utilisée.

On conçoit également que la réalisation de tels articles peut être réalisés dans des conditions de propreté compatibles avec les exigences imposées dans le domaine de l'industrie alimentaire. Dans ces conditions, les déchets ou rebut, non souillés, peuvent être réutilisés pour la fabrication d'autres articles, ce qui contribue à réduire les coûts de fabrication.

On notera enfin que l'invention n'est pas limitée aux modes de réalisation décrits. En effet, la machine décrite en référence aux figures 1 à 3 comporte un moule doté de trois étages. Il serait également possible, en variante, et en fonction du type d'articles à réaliser, de doter la machine d'un moule ayant un nombre différents d'étages.

De même, la machine décrite comporte un seul ensemble constitué par le moule et ses moyens de commande de déplacement, les moyens de positionnement de la feuille ou bande sur le moule, les moyens de chauffage, l'emboutisseur et les moyens de soufflage.

Bien entendu, pour la rendre compatible avec les exigences de fabrication à haute cadence, la machine comporte de préférence plusieurs tels ensembles fonctionnant simultanément pour la réalisation simultanée de plusieurs articles.

## Revendications

1. Procédé de fabrication d'articles de conditionnement ayant un corps (14) creux muni d'une extrémité ouverte (16) formant col, comprenant les étapes suivantes :
- application d'une feuille ou bande (60) de matière thermoplastique sur une extrémité ouverte de l'empreinte d'un moule (18), le moule étant constitué par une association d'éléments (30, 32, 34) dissociables constituant chacun une matrice de moulage d'un tronçon d'article, l'ouverture du moule étant réalisée en dissociant les éléments,
- chauffage de la feuille ou bande (50),
- emboutissage de la feuille ou bande par introduction d'un piston (20) dans l'enceinte du moule à travers l'ouverture de cette dernière de manière à former une ébauche,
- soufflage de l'ébauche formée contre la paroi du moule (18), et
- ouverture du moule (18),
**caractérisé en ce qu'**au cours de l'ouverture du moule, on aspire l'article contre un élément de fond (34) du moule.

2. Procédé selon la revendication 1, **caractérisé en ce que**, préalablement à l'emboutissage de la feuille ou bande (50), on procède à un détourage de cette dernière en pressant la feuille ou bande contre un élément tranchant (38) porté par le moule.

3. Procédé selon la revendication 1, **caractérisé en ce que**, postérieurement au soufflage de l'ébauche, on procède à un détourage de cette dernière en la pressant contre un élément tranchant (38) porté par le moule.

4. Procédé selon l'une quelconque des revendications 1 à 3, **caractérisé en ce que**, postérieurement au soufflage, on procède à un refroidissement de l'ébauche soufflée par circulation d'un fluide de refroidissement à travers la paroi du moule.

5. Machine de fabrication d'articles de conditionnement ayant un corps creux (14) muni d'une extrémité ouverte (16) formant col, du type comportant au moins un ensemble comprenant un moule (18) constitué d'éléments (30, 32, 34) dissociables, lesdits éléments dissociables constituant chacun une matrice de moulage d'un tronçon d'article et étant associés à des moyens moteurs de commande de leur déplacement pour l'ouverture et la fermeture du moule, des moyens de positionnement d'une feuille ou bande (50) de matière thermoplastique sur une extrémité ouverte de l'empreinte du moule (18), des moyens de chauffage de la bande ou feuille (50), un emboutisseur comportant un piston (20) axialement déplaçable dans le moule entre une position rétractée de repos dans laquelle il se situe en dehors du moule et une position active de formage d'une ébauche dans laquelle il pénètre dans le moule, et des moyens (20) de soufflage de l'ébauche formée contre la paroi du moule, **caractérisée en ce que** le fond du moule est doté d'au moins une tubulure (44) d'aspiration destinée à être connectée à un appareil d'aspiration pour le maintien de l'article contre ledit fond, au cours de l'ouverture du moule (18).

6. Machine selon la revendication 5, **caractérisée en ce qu'**elle comporte des moyens de préhension des articles en vue du transfert de ces derniers du fond du moule vers un poste de conditionnement.

7. Machine selon l'une des revendications 5 et 6, **caractérisée en ce que** le fond du moule (34) est doté de canaux (42) débouchant vers l'extérieur pour l'expulsion de l'air emplissant le moule, au cours du soufflage de l'ébauche.

8. Machine selon l'une quelconque des revendications 5 à 7, **caractérisée en ce qu'**elle comporte des moyens de détourage (38, 40) de la feuille ou bande ou de l'ébauche soufflée.

9. Machine selon l'une quelconque des revendications 5 à 8, **caractérisée en ce que** le moule comporte des canaux (46) de refroidissement de l'ébauche soufflée intégrés à la paroi du moule et destinés à être connectés à une source de fluide de refroidissement.

## Patentansprüche

1. Verfahren zur Herstellung von Verpackungsartikeln mit einem hohlen Körper (14), der mit einem offenen Ende (16) ausgestattet ist, das einen Hals bildet, wobei das Verfahren folgende Schritte umfasst:
- Aufbringen einer Folie oder eines Bands (60) aus thermoplastischem Material auf ein offenes Ende der Werkzeugform (18), wobei das Werkzeug aus einer Verbindung von zerlegbaren Elementen (30, 32, 34) besteht, die jeweils eine Matrize zum Formen eines Artikelabschnitts darstellen, wobei das Öffnen des Werkzeuges durch Auseinanderbewegen der Elemente erfolgt;
- Erhitzen der Folie oder des Bands (50),
- Tiefziehen der Folie oder des Bands durch Einführen eines Kolbens (20) in die Werkzeugeinfassung durch die Öffnung der Werkzeugeinfassung hindurch, so dass ein Rohling ausgebildet wird;
- Blasformen des ausgebildeten Rohlings gegen die Wand des Werkzeuges (18) und
- Öffnen des Werkzeuges (18),
**dadurch gekennzeichnet, dass** während des Öffnens des Werkzeuges der Artikel gegen ein Bodenelement (34) des Werkzeuges angesaugt wird.

2. Verfahren nach Anspruch 1, **dadurch gekennzeichnet, dass** vor dem Tiefziehen der Folie oder des Bands (50) ein Beschneiden von letzteren erfolgt, indem die Folie oder das Band gegen ein Beschneidungselement (38) gepresst wird, das sich am Werkzeug befindet.

3. Verfahren nach Anspruch 1, **dadurch gekennzeichnet, dass** nach dem Blasformen des Rohlings ein Beschneiden desselben erfolgt, indem er gegen ein Beschneidungselement (38) gedrückt wird, das sich am Werkzeug befindet.

4. Verfahren nach einem der Ansprüche 1 bis 3, **dadurch gekennzeichnet, dass** nach dem Blasformen ein Abkühlen des blasgeformten Rohlings durch Zirkulation einer Kühlflüssigkeit durch die Wand des Werkzeuges erfolgt.

5. Maschine zur Herstellung von Verpackungsartikeln mit einem hohlen (14) Körper, der mit einem offenen Ende (16) versehen ist, das einen Hals bildet, und die mindestens einen Werkzeugsatz (18) der aus zerlegbaren (30, 32, 34) Elementen besteht, aufweist, wobei die zerlegbaren Elemente jeweils eine Matrize zum Formen eines Artikelabschnitts darstellen und mit motorischen Mitteln zum Steuern ihres Verschiebens für das öffnen und Schließen des Werkzeuges verbunden sind, Mittel zum Positionieren der Folie oder des Bands (50) aus thermoplastischem Material auf einem offenen Ende der Werkzeugform (18), Mittel zum Erhitzen des Bands oder der Folie (50), eine Tiefziehvorrichtung, die einen Kolben (20) aufweist, der axial im Werkzeug zwischen einer eingezogenen Ruhevorrichtung, in welcher er sich außerhalb des Werkzeuges befindet, und einer aktiven Position zum Formen eines Rohlings verschiebbar ist, in welcher der Kolben in das Werkzeug eindringt, und Mittel (20) zum Blasformen des ausgebildeten Rohlings gegen die Wand des Werkzeuges umfasst, **dadurch gekennzeichnet, dass** der Boden des Werkzeuges mit mindestens einem Saugstutzen (44) versehen ist, der dazu bestimmt ist, an eine Saugvorrichtung angeschlossen zu werden, um den Artikel während des Öffnens des Werkzeuges (18) gegen den Boden zu halten.

6. Maschine nach Anspruch 5, **dadurch gekennzeichnet, dass** sie Mittel zum Greifen der Artikel umfasst, um die Artikel vom Boden des Werkzeuges zu einer Verpackungsstation zu bewegen.

7. Maschine nach einem der Ansprüche 5 und 6, **dadurch gekennzeichnet, dass** der Boden des Werkzeuges (34) mit Kanälen (42) versehen ist, die nach außen verlaufen, um die Luft auszustoßen, mit der das Werkzeug während des Blasformens des Rohlings aufgefüllt wird.

8. Maschine nach einem der Ansprüche 5 bis 7, **dadurch gekennzeichnet, dass** sie Mittel zum Beschneiden (38, 40) der Folie oder des Bands oder des blasgeformten Rohlings aufweist.

9. Maschine nach einem der Ansprüche 5 bis 8, **dadurch gekennzeichnet, dass** das Werkzeug Kanäle (46) zum Kühlen des blasgeformten Rohlings aufweist, die in die Wand des Werkzeuges integriert und dazu bestimmt sind, an eine Quelle für eine Kühlflüssigkeit angeschlossen zu werden.

## Claims

1. Process for manufacturing packaging articles having a hollow body (14) provided with an open end (16) which forms the neck, comprising the following steps:
- applying a sheet or strip (60) of thermoplastic material to an open end of the indentation in a mould (18), the mould being made up of a combination of elements (30, 32, 34) which can be separated, each constituting a die for moulding a section of the item, the mould being opened by separating the elements,
- heating the sheet or strip (50),
- shaping the sheet or strip by the introduction of a piston (20) into the interior of the mould through the opening therein so as to produce a preform,
- blow-moulding the preform produced against the wall of the mould (18), and
- opening the mould (18),
**characterised in that** during the opening of the mould the article is applied by suction against a base element (34) of the mould.

2. Process according to claim 1, **characterised in that**, prior to the shaping of the sheet or strip (50), the latter is cut out by pressing the sheet or strip against a cutting element (38) carried by the mould.

3. Process according to claim 1, **characterised in that**, after the blow-moulding of the preform, the latter is cut out by pressing it against a cutting element (38) carried by the mould.

4. Process according to any one of claims 1 to 3, **characterised in that**, after the blow-moulding, the blow-moulded preform is cooled by the circulation of a cooling fluid through the wall of the mould.

5. Machine for producing packaging articles having a hollow body (14) provided with an open end (16) which forms the neck, of the type having at least one assembly comprising a mould (18) made up of elements (30, 32, 34) which can be separated, the separable elements each constituting a die for moulding a section of the article and being associated with drive means controlling their movement for opening and closing the mould, means for positioning a sheet or strip (50) of thermoplastic material over an open end of the indentation of the mould (18), means for heating the sheet or strip (50), a shaper comprising a piston (20) which is axially displaceable in the mould between a retracted resting position in which it is located outside the mould and an active position for forming a preform in which it penetrates into the mould, and means (26) for blow-moulding the preform produced against the wall of the mould, **characterised in that** the base of the mould is provided with at least one suction tube (44) adapted to be connected to a suction apparatus for holding the article against said base while the mould (18) is being opened.

6. Machine according to claim 5, **characterised in that** it comprises means for gripping the articles in order to transfer them from the base of the mould to a packaging station.

7. Machine according to one of claims 5 and 6, **characterised in that** the base of the mould (34) is provided with channels (42) opening outwards for expelling the air which fills the mould, during the blow-moulding of the preform.

8. Machine according to any one of claims 5 to 7, **characterised in that** it comprises means (38, 40) for cutting out the sheet or strip or the blow-moulded preform.

9. Machine according to any one of claims 5 to 8, **characterised in that** the mould comprises channels (46) for cooling the blow-moulded preform which are integrated in the wall of the mould and adapted to be connected to a source of cooling fluid.
